(19) Europäisches Patentamt / European Patent Office / Office européen des brevets

(11) **EP 3 709 207 A1**

(12) **EUROPEAN PATENT APPLICATION**

(43) Date of publication:
16.09.2020 Bulletin 2020/38

(51) Int Cl.:
*G06F 40/30* (2020.01)   *G06F 16/53* (2019.01)
*G06N 3/02* (2006.01)

(21) Application number: 20150895.9

(22) Date of filing: 09.01.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.03.2019 CN 201910185125

(71) Applicant: Beijing Baidu Netcom Science and
Technology Co., Ltd.
Beijing 100085 (CN)

(72) Inventors:
• HUANG, Jianhui
BEIJING, 100085 (CN)
• QIAO, Min
BEIJING, 100085 (CN)
• HUANG, Pingping
BEIJING, 100085 (CN)
• ZHU, Yong
BEIJING, 100085 (CN)
• LYU, Yajuan
BEIJING, 100085 (CN)
• LI, Ying
BEIJING, 100085 (CN)

(74) Representative: Studio Torta S.p.A.
Via Viotti, 9
10121 Torino (IT)

(54) **VISUAL QUESTION ANSWERING MODEL, ELECTRONIC DEVICE AND STORAGE MEDIUM**

(57) Embodiments of the present disclosure disclose a visual question answering model, an electronic device and a storage medium. The visual question answering model includes an image encoder and a text encoder. The text encoder is configured to perform pooling on a word vector sequence of a question text inputted, so as to extract a semantic representation vector of the question text; and the image encoder is configured to extract an image feature of a given image in combination with the semantic representation vector. By processing a text vector through pooling, the embodiments according to the present disclosure ensure that model training efficiency is effectively improved on the premise of a small loss of prediction accuracy of the visual question answering model, and thus the model is beneficial to the use in engineering.

FIG. 1

EP 3 709 207 A1

**Description**

**FIELD**

Embodiments of the present disclosure relate to a technical field of artificial intelligence, and more particularly, to a visual question answering model, an electronic device and a storage medium.

**BACKGROUND**

The visual question answering (VQA) system is a typical application of multi-modality fusion. For example, for a given image in which there is a batter wearing red clothes, if a relevant question "what color shirt is the batter wearing?" is presented, the VQA model needs to combine image information and text question information to predict that the answer as "red". This process mainly involves semantic feature extraction on the image and text, and fusion of features of two modalities: the extracted image and text, so that encoding of the VQA-related model mainly consists of a text encoder and an image encoder.

However, due to a need to involve both the image encoder and the text encoder, the VQA model usually contains a large number of parameters that require training, and thus time required for the model training is quite long. Therefore, on the premise that a loss of model accuracy is not great, how to improve training efficiency of the model by simplifying the model from the engineering point of view becomes a technical problem that needs to be solved urgently at present.

**SUMMARY**

Embodiments of the present disclosure provide a visual question answering model, an electronic device and a storage medium, so as to achieve an aim of improving training efficiency of the model by simplifying the model from the engineering point of view on the premise that a loss of model accuracy is not great.

In a first aspect, an embodiment of the present disclosure provides a visual question answering model, including an image encoder and a text encoder, in which, the text encoder is configured to perform pooling on a word vector sequence of a question text inputted, so as to extract a semantic representation vector of the question text; and the image encoder is configured to extract an image feature of a given image in combination with the semantic representation vector.

In an embodiment, the text encoder is configured to: perform maxPooling processing or avgPooling processing on the word vector sequence of the question text to extract the semantic representation vector of the question text.

In an embodiment, the maxPooling processing is expressed by an equation of:

$$f(w1, w2, \ldots\ldots, wk) = \max([w1, w2, \ldots\ldots, wk], \dim = 1)$$

where f represents a function of the maxPooling processing; k is a number of word vectors contained in the question text; wi is an $i^{th}$ word vector obtained by processing the question text with a pre-trained word vector model, and i is a natural number in [1, k]; and max([wl, w2, ... , wk], dim=1) represents determining a maximum value from word vectors w1, w2, ... , wk corresponding to dim=1, in which dim=1 represents determining a value by row.

In an embodiment, the avgPooling processing is expressed by an equation of:

$$p(w1, w2, \ldots\ldots, wk) = \frac{\sum_{i=1}^{k} wi}{k}$$

where p represents a function of the avgPooling processing; k is a number of word vectors contained in the question text; wi is an $i^{th}$ word vector obtained by processing the question text with a pre-trained word vector model, and i is a natural number in [1, k]; and $\sum_{i=1}^{k} wi$ represents a sum of values of word vectors w1, w2, ... ,wk in each row.

In a second aspect, an embodiment of the present disclosure further provides an electronic device, including: one or more processors; and a storage device, configured to store one or more programs, in which when the one or more programs are executed by the one or more processors, the one or more processors are configured to operate a visual question answering model according to any one of the embodiments of the present disclosure.

In a third aspect, an embodiment of the present disclosure further provides a computer readable storage medium having a computer program stored thereon, wherein when the program is executed by a processor, the program operates a visual question answering model according to any one of the embodiments of the present disclosure.

Embodiments of the present disclosure provide a visual question answering model, an electronic device and a storage medium. For the visual question answering model, a text vector is encoded by pooling to simplify the visual question answering model, and the quantity of parameters needing to be trained in the visual question answering model is reduced by the simple encoding mode of pooling, so that the training efficiency of the visual question answering model is effectively improved, and thus the model is beneficial to use in engineering.

**BRIEF DESCRIPTION OF THE DRAWINGS**

FIG. 1 is a schematic diagram of a visual question answering model according to Embodiment 1 of the present disclosure.
FIG. 2 is a schematic diagram of another visual question answering model according to Embodiment 2 of the present disclosure.
FIG. 3 is a schematic diagram of an electronic device according to Embodiment 3 of the present disclosure.

**DETAILED DESCRIPTION**

The present disclosure will be described in detail below with reference to the accompanying drawings and the embodiments. It may be understood that, the specific embodiments described herein are only used to explain the present disclosure rather than to limit the present disclosure. In addition, it should also be noted that, for convenience of description, only part but not all structures related to the present disclosure are illustrated in the accompanying drawings.

Embodiment 1

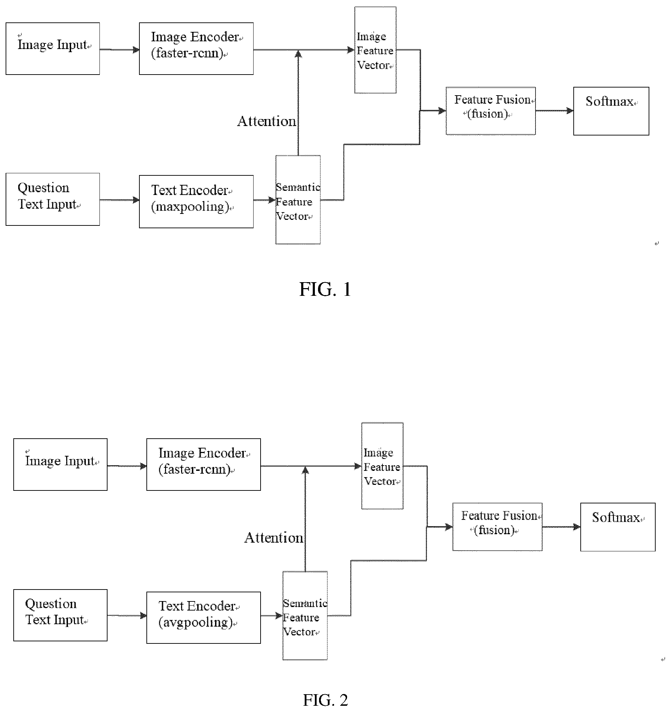

FIG. 1 is a visual question answering model according to this embodiment of the present disclosure. This embodiment improves training efficiency of the visual question answering model by simplifying the visual question answering model. The model may be operated on an electronic device, such as a computer terminal or a server.
As illustrated in FIG. 1, the visual question answering model according to the embodiment of the present disclosure may include: a text encoder configured to perform pooling on a word vector sequence of a question text inputted, so as to extract a semantic representation vector of the question text.
Before the question text is encoded, the question text needs to be preprocessed. Illustratively, the question text is processed with a word2vec model or a glove model to obtain the word vector sequence corresponding to the question text. To encode the question text, the word vector sequence corresponding to the question text may be input into the text encoder, and then the text encoder performs pooling on the word vector sequence of the question text to extract the semantic representation vector of the question text. It should be noted that in the prior art, a LSTM (long short-term memory) model or a Bi-LSTM (bi-directional long short-term memory) model is configured as the text encoder. In the present disclosure, the pooling replaces the LSTM model or the Bi-LSTM model and is configured as the text encoder, and thus the visual question answering model is simplified.
In the embodiment, the pooling refers to maxPooling processing, which is expressed by an equation of:

$$f(w1, w2, \ldots\ldots, wk) = \max([w1, w2, \ldots\ldots, wk], \dim = 1)$$

where f represents a function of the maxPooling processing; k is a number of word vectors contained in the question text; wi is an $i^{th}$ word vector obtained by processing the question text with a pre-trained word vector model, and i is a natural number in [1, k]; and max([wl, w2, ... , wk], dim=1) represents determining a maximum value from word vectors w1, w2, ... , wk corresponding to dim=1, in which dim=1 refers to a dimension of determining a value by row, i.e., for a given two-dimensional matrix, a maximum value is determined row by row from w1 to wk.

Illustratively, a word vector sequence of a question text is $\begin{bmatrix} 0.1 & 0.2 & 0.3 \\ 0.2 & 0.1 & -0.1 \\ 0.3 & 0.4 & 0.2 \end{bmatrix}$, and $\begin{bmatrix} 0.3 \\ 0.2 \\ 0.4 \end{bmatrix}$ is obtained

after the maxPooling processing is performed on the word vector sequence according to the above equation. Conse-

quently, $\begin{bmatrix} 0.3 \\ 0.2 \\ 0.4 \end{bmatrix}$ is a semantic representation vector of the question text. Consequently, the number of parameters that need to be trained in the visual question answering model is reduced by the maxPooling processing, thereby improving the training efficiency of the visual question answering model.

In addition, an image encoder in the visual question answering model according to the embodiment of the present disclosure is configured to extract an image feature of a given image in combination with the semantic representation vector.

Since an image contains background and rich content, in order to ensure that the machine pays more attention to image content related to the question for improving the accuracy of the question answer, a visual attention mechanism (Attention in FIG. 1) may be used. With the Attention mechanism, the image encoder may, according to the semantic representation vector corresponding to the question text obtained in combination with the text encoder, lock image content have the highest relevance with the semantic representation vector, and may extract the image feature of the image content, so as to obtain an image feature vector. The image encoder may adopt a convolutional neural network model, such as a Faster RCNN model.

Further, as illustrated in FIG. 1, the visual question answering model includes a feature fusion for fusing features of different modalities. In this embodiment, the feature fusion is configured to fuse the image feature vector output by the image encoder and the semantic representation vector output by the text encoder. Illustratively, the image feature vector and the semantic representation vector may be fused by means of dot product.

The visual question answering model further includes a classifier that numerically processes the vector output by the feature fusion with a softmax function (also referred to as a normalized exponential function), so as to obtain a relative probability between different answers, and to output an answer corresponding to the maximum relative probability.

For the above-mentioned visual question answering model, in a specific implementation, a set of data Visual Genome released by the Stanford Artificial Intelligence Laboratory is used as training sample data and verification data. In addition, the training sample data and the verification data may be randomly divided by a ratio of 2:1, so as to train and to verify the visual question answering model. Specific data statistics of the set of data are shown in Table 1. Each image contains a certain number of questions, and the given answer is manually marked.

Table 1

| Name | Number |
|---|---|
| the number of images | 10,8077 |
| the number of questions | 1,445,322 |

The visual question answering model according to the embodiment is trained and verified by the above data. Specifically, the visual question answering model may be run on a P40 cluster, and environment configuration of the P40 cluster and basic parameters of the model are shown in Table 2. For comparison, visual question answering models using LSTM and Bi-LSTM respectively as the text encoders in the prior art are trained and verified simultaneously. The results are shown in Table 3.

It may be seen from the verification results listed in Table 3 that compared with the existing visual question answering model using LSTM or Bi-LSTM as the text encoder, the visual question answering model using the maxPooling processing as the text encoder according to the embodiment of the present disclosure has a merely 0.5% loss on prediction accuracy while shortening the running time of the model by up to 3 hours, so that the training efficiency is greatly improved.

Table 2

| Name | Configuration | Additional |
|---|---|---|
| System | Centos6.0 | |
| Type of GPU | P40 | The memory space of the graphics card is 24G. |
| Number of GPU | 4 cards | |
| Batch_size | 512 | |
| Epochs | 12,000 | Epoch is counted in mini-batch. |

Table 3

| Text Encoder | Running Time | Prediction Accuracy |
|---|---|---|
| LSTM | 7.5h | 41.39% |
| Bi-LSTM | 8.2h | 41.36% |
| maxPooling | 5.2h | 40.84% |

According to the embodiment of the present disclosure, for the visual question answering model, the text vector is encoded by pooling to simplify the visual question answering model, and through the simple encoding manner of pooling, the model achieves that the training efficiency of the visual question answering model is effectively improved on the premise of a small loss of prediction accuracy of the visual question answering model, and thus the model is beneficial to the use in engineering.

Embodiment 2

FIG. 2 is a schematic diagram of another visual question answering model according to this embodiment of the present disclosure. As shown in FIG. 2, the visual question answering model includes: the text encoder, wherein the text encoder is configured to perform pooling on the word vector sequence of the question text inputted, so as to extract the semantic representation vector of the question text.

The pooling refers to an avgPooling processing, which may be expressed by an equation of:

$$p(w1, w2, \ldots \ldots, wk) = \frac{\sum_{i=1}^{k} wi}{k}$$

where p represents a function of the avgPooling processing; k is a number of word vectors contained in the question text; wi is an $i^{th}$ word vector obtained by processing the question text with a pre-trained word vector model, and i is a natural number in [1, k]; and $\sum_{i=1}^{k} wi$ represents a sum of values of word vectors w1, w2, ... ,wk in each row.

Illustratively, a word vector sequence of a question text is $\begin{bmatrix} 0.1 & 0.2 & 0.3 \\ 0.2 & 0.1 & -0.1 \\ 0.3 & 0.4 & 0.2 \end{bmatrix}$, and $\begin{bmatrix} 0.2 \\ 0.07 \\ 0.3 \end{bmatrix}$ is obtained after avgPooling processing is performed on the word vector sequence according to the above equation. Consequently,

$\begin{bmatrix} 0.2 \\ 0.07 \\ 0.3 \end{bmatrix}$ is a semantic representation vector of the question text. Consequently, the number of parameters that need to be trained in the visual question answering model is reduced by the avgPooling processing, thereby improving the training efficiency of the visual question answering model.

In addition, the image encoder in the visual question answering model according to the embodiment of the present disclosure is configured to extract the image feature of the given image in combination with the semantic representation vector.

Further, the visual question answering model further includes the feature fusion and the classifier. Reference to the feature fusion and the classifier may be made to the above embodiment, and repeated description is omitted herein.

The visual question answering model according to the embodiment is trained and verified on the afore-mentioned P40 cluster with the aforementioned set of data Visual Genome. In addition, visual question answering models using LSTM and Bi-LSTM respectively as the text encoders in the prior art are trained and verified simultaneously. The results are shown in Table 4.

Table 4

| Text Encoder | Running Time | Prediction Accuracy |
|---|---|---|
| LSTM | 7.5h | 41.39% |
| Bi-LSTM | 8.2h | 41.36% |

(continued)

| Text Encoder | Running Time | Prediction Accuracy |
|---|---|---|
| avgPooling | 5.8h | 40.96% |

It may be seen from Table 4 that compared with the existing visual question answering model using LSTM or Bi-LSTM as the text encoder, the visual question answering model using the avgPooling processing as the text encoder according to the embodiment of the present disclosure has a merely 0.4% loss on prediction accuracy while shortening the running time of the model by up to 2.4 hours, so that the training efficiency is improved.

According to the embodiment of the present disclosure, for the visual question answering model, the text vector is encoded by the avgPooling processing to simplify the visual question answering model, and through the simple encoding manner of the avgPooling processing, the model achieves that the training efficiency of the visual question answering model is effectively improved on the premise of a small loss of prediction accuracy of the visual question answering model, and thus the model is beneficial to the use in engineering.

Embodiment 3

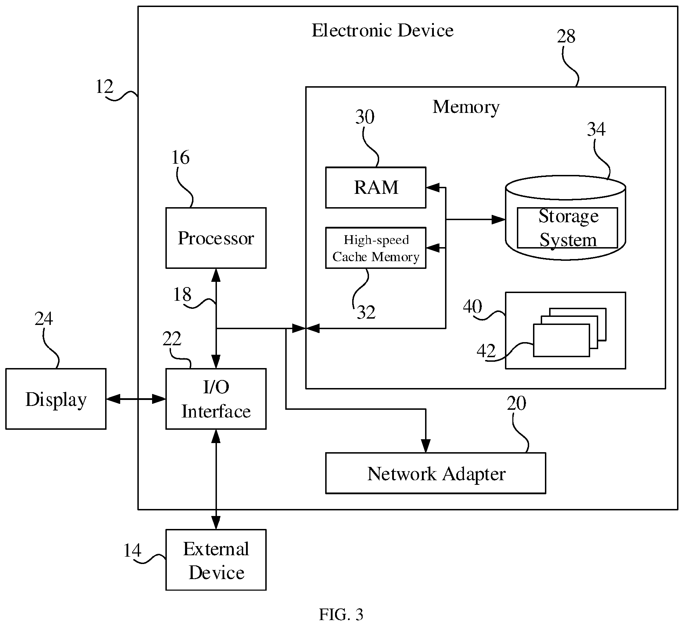

FIG. 3 is a schematic diagram of an electronic device according to this embodiment of the present disclosure. FIG. 3 is a block diagram of an electronic device 12 for implementing embodiments of the present disclosure. The electronic device 12 illustrated in FIG. 3 is only illustrated as an example, and should not be considered as any restriction on the function and the usage range of embodiments of the present disclosure.

As illustrated in FIG. 3, the electronic device 12 is represented in a form of a general-purpose computing apparatus. The electronic device 12 may include, but is not limited to, one or more processors or processing units 16, a system memory 28, and a bus 18 connecting different system components (including the system memory 28 and the processor 16).

The bus 18 represents one or more of several types of bus architectures, including a memory bus or a memory control bus, a peripheral bus, a graphic acceleration port (GAP) bus, a processor bus, or a local bus using any bus architecture in a variety of bus architectures. For example, these architectures include, but are not limited to, an industry standard architecture (ISA) bus, a micro-channel architecture (MCA) bus, an enhanced ISA bus, a video electronic standards association (VESA) local bus, and a peripheral component interconnect (PCI) bus.

Typically, the electronic device 12 may include multiple kinds of computer-readable media. These media may be any storage media accessible by the electronic device 12, including transitory or non-transitory storage medium and movable or unmovable storage medium.

The memory 28 may include a computer-readable medium in a form of volatile memory, such as a random access memory (RAM) 30 and/or a high-speed cache memory 32. The electronic device 12 may further include other transitory/non-transitory storage media and movable/unmovable storage media. In way of example only, the storage system 34 may be configured to read and write non-removable, non-volatile magnetic media (not shown in the figure, commonly referred to as "hard disk drives"). Although not illustrated in FIG. 3, it may be provided a disk driver for reading and writing movable non-volatile magnetic disks (e.g. "floppy disks"), as well as an optical driver for reading and writing movable non-volatile optical disks (e.g. a compact disc read only memory (CD-ROM, a digital video disc read only Memory (DVD-ROM), or other optical media). In these cases, each driver may be connected to the bus 18 via one or more data medium interfaces. The memory 28 may include at least one program product, which has a set of (for example at least one) program modules configured to perform the functions of embodiments of the present disclosure.

A program/application 40 with a set of (at least one) program modules 42 may be stored in memory 28, the program modules 42 may include, but not limit to, an operating system, one or more application programs, other program modules and program data, and any one or combination of above examples may include an implementation in a network environment. The program modules 42 are generally configured to implement functions and/or methods described in embodiments of the present disclosure.

The electronic device 12 may also communicate with one or more external devices 14 (e.g., a keyboard, a pointing device, a display 24, and etc.) and may also communicate with one or more devices that enables a user to interact with the computer system/electronic device 12, and/or any device (e.g., a network card, a modem, and etc.) that enables the computer system/electronic device 12 to communicate with one or more other computing devices. This kind of communication can be achieved by the input/output (I/O) interface 22. In addition, the electronic device 12 may be connected to and communicate with one or more networks such as a local area network (LAN), a wide area network (WAN) and/or a public network such as the Internet through a network adapter 20. As shown in Fig.9, the network adapter 20 communicates with other modules of the electronic device 12 over bus 18. It should be understood that although not shown in the figure, other hardware and/or software modules may be used in combination with the electronic device 12, which including, but not limited to, microcode, device drivers, redundant processing units, external disk drive arrays, RAID systems, tape drives, as well as data backup storage systems and the like.

The processor 16 can perform various functional applications and data processing by running programs stored in the system memory 28, for example, to run the visual question answering model according to embodiments of the present disclosure. The visual question answering model includes: an image encoder and a text encoder, in which the text encoder is configured to perform pooling on a word vector sequence of a question text inputted, so as to extract a semantic representation vector of the question text; and the image encoder is configured to extract an image feature of a given image in combination with the semantic representation vector.

Embodiment 4

Embodiment 4 of the present disclosure provides a storage medium including a computer readable storage medium. The storage medium stores the visual question answering model according to the embodiment of the present disclosure and is run by a computer processor. The visual question answering model includes: an image encoder and a text encoder, wherein the text encoder is configured to perform pooling on a word vector sequence of a question text inputted, so as to extract a semantic representation vector of the question text; and the image encoder is configured to extract an image feature of a given image in combination with the semantic representation vector.

Certainly, the computer readable storage medium according to the embodiment of the present disclosure may also execute a visual question answering model according to any embodiment of the present disclosure.

The computer storage medium may adopt any combination of one or more computer readable media. The computer readable medium may be a computer readable signal medium or a computer readable storage medium. The computer readable storage medium may be, but is not limited to, for example, an electrical, magnetic, optical, electromagnetic, infrared, or semiconductor system, apparatus, device, component or any combination thereof. A specific example of the computer readable storage media include (a non-exhaustive list): an electrical connection having one or more wires, a portable computer disk, a hard disk, a random access memory (RAM), a read only memory (ROM), an Erasable Programmable Read Only Memory (EPROM) or a flash memory, an optical fiber, a compact disc read-only memory (CD-ROM), an optical memory component, a magnetic memory component, or any suitable combination thereof. In context, the computer readable storage medium may be any tangible medium including or storing programs. The programs may be used by an instruction executed system, apparatus or device, or a connection thereof.

The computer readable signal medium may include a data signal propagating in baseband or as part of carrier which carries a computer readable program codes. Such propagated data signal may be in many forms, including but not limited to an electromagnetic signal, an optical signal, or any suitable combination thereof. The computer readable signal medium may also be any computer readable medium other than the computer readable storage medium, which may send, propagate, or transport programs used by an instruction executed system, apparatus or device, or a connection thereof.

The program code stored on the computer readable medium may be transmitted using any appropriate medium, including but not limited to wireless, wireline, optical fiber cable, RF, or any suitable combination thereof.

The computer program code for carrying out operations of embodiments of the present disclosure may be written in one or more programming languages. The programming language includes an object oriented programming language, such as Java, Smalltalk, C ++, as well as conventional procedural programming language, such as "C" language or similar programming language. The program code may be executed entirely on a user's computer, partly on the user's computer, as a separate software package, partly on the user's computer, partly on a remote computer, or entirely on the remote computer or server. In a case of the remote computer, the remote computer may be connected to the user's computer or an external computer (such as using an Internet service provider to connect over the Internet) through any kind of network, including a Local Area Network (hereafter referred as to LAN) or a Wide Area Network (hereafter referred as to WAN).

It should be noted that, the above are only preferred embodiments and applied technical principles of the present disclosure. Those skilled in the art should understand that, the present disclosure is not limited to the specific embodiments described herein, and various obvious changes, readjustments and substitutions that are made by those skilled in the art will not depart from the scope of the present disclosure. Therefore, although the present disclosure has been described in detail by the above embodiments, the present disclosure is not limited to the above embodiments, and more other equivalent embodiments may be included without departing from the concept of the present disclosure, and the scope of the present disclosure is determined by the scope of the appended claims.

**Claims**

1. A visual question answering model, comprising an image encoder and a text encoder,

wherein the text encoder is configured to perform pooling on a word vector sequence of a question text inputted, so as to extract a semantic representation vector of the question text; and
the image encoder is configured to extract an image feature of a given image in combination with the semantic representation vector.

2. The model according to claim 1, wherein the text encoder is configured to:
perform maxPooling processing or avgPooling processing on the word vector sequence of the question text to extract the semantic representation vector of the question text.

3. The model according to claim 2, wherein the maxPooling processing is expressed by an equation of:

$$f(w1, w2, \ldots\ldots, wk) = \max([w1, w2, \ldots\ldots, wk], \dim = 1)$$

where f represents a function of the maxPooling processing; k is a number of word vectors contained in the question text; wi is an $i^{th}$ word vector obtained by processing the question text with a pre-trained word vector model, and i is a natural number in [1, k]; and max([wl, w2, ... , wk], dim=1) represents determining a maximum value from word vectors w1, w2, ... , wk corresponding to dim=1, in which dim=1 represents determining a value by row.

4. The model according to claim 2, wherein the avgPooling processing is expressed by an equation of:

$$p(w1, w2, \ldots\ldots, wk) = \frac{\sum_{i=1}^{k} wi}{k}$$

where p represents a function of the avgPooling processing; k is a number of word vectors contained in the question text; wi is an $i^{th}$ word vector obtained by processing the question text with a pre-trained word vector model, and i is a natural number in [1, k]; and $\sum_{i=1}^{k} wi$ represents a sum of values of word vectors w1, w2, ... ,wk in each row.

5. An electronic device, comprising:

one or more processors; and
a storage device, configured to store one or more programs,
wherein when the one or more programs are executed by the one or more processors, the one or more processors are configured to operate a visual question answering model according to any one of claims 1 to 4.

6. A computer readable storage medium having a computer program stored thereon, wherein when the program is executed by a processor, the program operates a visual question answering model according to any one of claims 1 to 4.

FIG. 1

FIG. 2

FIG. 3

Europäisches
Patentamt

European
Patent Office

Office européen
des brevets

# EUROPEAN SEARCH REPORT

Application Number

EP 20 15 0895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PENG WANG ET AL: "The VQA-Machine: Learning How to Use Existing Vision Algorithms to Answer New Questions", ARXIV.ORG, CORNELL UNIVERSITY LIBRARY, 201 OLIN LIBRARY CORNELL UNIVERSITY ITHACA, NY 14853, 16 December 2016 (2016-12-16), XP080744846, DOI: 10.1109/CVPR.2017.416 * section 3.1 * | 1-6 | INV. G06F40/30 G06F16/53 G06N3/02 |
| X | LIN MA ET AL: "Learning to Answer Questions From Image using Convolutional Neural Network", ARXIV.ORG, CORNELL UNIVERSITY LIBRARY, 201 OLIN LIBRARY CORNELL UNIVERSITY ITHACA, NY 14853, 1 June 2015 (2015-06-01), XP080794028, * sections 3.1, 3.2 * | 1-6 | |
| A | Han Xiao: "4 Sequence Encoding Blocks You Must Know Besides RNN/LSTM in Tensorflow", Han Xiao Tech Blog - Deep Learning, NLP, AI, 24 June 2018 (2018-06-24), XP055717716, Retrieved from the Internet: URL:https://hanxiao.io/2018/06/24/4-Encoding-Blocks-You-Need-to-Know-Besides-LSTM-RNN-in-Tensorflow/ [retrieved on 2020-07-23] * page 3 * | 1-6 | TECHNICAL FIELDS SEARCHED (IPC) G06F G06N |

The present search report has been drawn up for all claims

| Place of search | Date of completion of the search | Examiner |
|---|---|---|
| Berlin | 24 July 2020 | Abram, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                
& : member of the same patent family, corresponding document

EPO FORM 1503 03.82 (P04C01)